# FASCICULE DE BREVET EUROPEEN

(11) **EP 1 894 407 B1**
(45) Date de publication et mention de la délivrance du brevet: **06.04.2016**
(21) Numéro de dépôt: 06778955.2
(22) Date de dépôt: 19.06.2006
(51) Int. Cl.: H04N 5/00

(54) **PROCEDE ET DISPOSITIF DE SECURITE POUR LA GESTION D'ACCES A DES CONTENUS MULTIMEDIAS**
SYSTEM UND VERFAHREN ZUR SICHERUNG DES ZUGANGS ZU MULTIMEDIA-INHALTEN
METHOD AND DEVICE FOR MAKING SECURE ACCESS TO MULTIMEDIA CONTENTS

(30) Priorité: 20.06.2005 FR 0506233
(43) Date de publication de la demande: 05.03.2008
(73) Titulaire: Orangefrance, 94745 Arcueil Cedex (FR)
(72) Inventeur: TALAOUIT, Vincent, F-75017 Paris (FR); ANNIC, Etienne, F-78120 Rambouillet (FR)
(74) Mandataire: Desormiere, Pierre-Louis
(86) Numéro de dépôt international: PCT/FR2006/050609
(87) Numéro de publication internationale: WO 2006/136749

(56) Documents cités:
- EP-A- 0 719 045
- WO-A-2004/006043
- US-A1- 2003 194 968
- US-A1- 2004 005 900
- US-A1- 2004 015 730
- US-B1- 6 523 022

## Description

### Domaine de l'invention

La présente invention se rapporte au domaine des terminaux de communication (ex. téléphones portables, des PDA communicants, PC, etc.) équipés d'un dispositif de sécurité (ex. carte à puce) et concerne plus particulièrement l'accès à des contenus multimédias proposés par les opérateurs via un réseau de communications.

### Art antérieur

Pour un grand nombre de terminaux de communication, tels que les téléphones mobiles, un dispositif de sécurité géré par un tiers de confiance (ex. opérateur) est nécessaire pour le fonctionnement du terminal. Un tel dispositif de sécurité est par exemple une carte UICC (pour "UMTS Integrated Circuit Card") (aussi appelée carte SIM pour "Subscriber Identity Module" ou encore carte USIM pour "Universal Subscriber Identity Module"). Ce dispositif permet entre autre l'authentification de l'abonné sur un réseau mobile de télécommunication, le chiffrement des échanges (vocaux ou de données) ainsi que la personnalisation du terminal mobile. Elle permet aussi l'accès à des services à valeur ajoutée tels que la messagerie, le suivi de la consommation, le service client, le répertoire personnel de l'utilisateur, le renvoi d'appel, le mini message, etc.. Ces services sont stockés dans la carte d'abonné et y sont implémentés sous la forme d'appels téléphoniques. En effet, dans le cas par exemple d'un service de messagerie, la sélection de ce service sur le menu revient en fait à un appel téléphonique sur le réseau GSM en mode circuit voix vers un numéro de téléphone (type E-164) qui correspond en général à celui d'un serveur vocal.

Avec l'arrivée de systèmes de télécommunication mobile de nouvelles générations (3G) accompagnés de nouvelles normes haut débit telles que les normes UMTS ou GPRS permettant des transmissions de données en mode paquet, les opérateurs souhaitent pouvoir proposer des services ou contenus multimédias de plus en plus sophistiqués.

Les solutions actuelles pour mettre en oeuvre de tels services nécessitent préalablement le paramétrage des accès du terminal par son utilisateur. A titre d'exemple, dans le cadre d'une configuration GPRS/UMTS d'un accès "Internet" sur un terminal mobile du commerce, la procédure à suivre est la suivante :
étape 1 : accéder au menu « connexions »;
étape 2 : accéder au sous-menu « communication data »;
étape 3 : accéder au sous-menu « accès data »;
étape 4 : sélectionner parmi une liste, l'accès data correspondant au(x) service(s) à paramétrer;
étape 5 : sélectionner le(s) paramètre(s) à modifier parmi la liste de paramètres affichés et procéder à sa modification.

Les paramètres mentionnés sont *« APN », « adresse IP », « adresse DNS », « compression d'entête », « compression de données », « paramètres de qualité de services* », *« application par défaut », « nom utilisateur »,* « *mot de passe* »*...*

Il est clair que le paramétrage d'un accès "Internet" via un réseau d'accès GPRS/UMTS donnant accès à un contenu tel qu'une messagerie électronique réclame des connaissances technologiques qui ne sont pas à la portée d'un simple utilisateur non expert ou non spécialiste.

Pour y remédier, les opérateurs ont demandé aux constructeurs de terminaux mobiles de paramétrer en usine les terminaux avec un paramétrage prenant en compte les principaux contenus de l'opérateur. Mais cette solution est limitée par les capacités de paramétrage propres à chaque terminal, ce qui limite le nombre de services pouvant être paramétrés par l'opérateur ainsi que le type de contenu paramétrable.

Cette solution ne prend pas en compte la modification du paramétrage qui peut évoluer au cours du temps et qu'il est nécessaire de modifier sur le terminal pour continuer à accéder au service.

En outre, elle ne permet pas non plus de garantir la sûreté des contenus paramétrés, ne disposant pas de moyens pour sécuriser la modification ou la création du paramétrage de l'accès aux contenus, pouvant être faites à l'insu de son utilisateur par une application malveillante du terminal mobile. A titre d'exemple, les premiers virus sur terminaux mobiles ont fait leur apparition. Le virus "Warrior A" a pour conséquence de modifier le paramétrage et envoie à l'insu de l'utilisateur des messages électroniques surtaxés. L'utilisateur ne peut que constater après coup un montant de facture exagéré et non justifié.

Cette étape de paramétrage étant préalablement réalisée, l'utilisateur est invité à choisir la fonctionnalité "accès à un réseau de communication" dans le menu constructeur du terminal en appuyant, par exemple, sur une touche spécifique "touche d'accès à un réseau de communication". Le terminal affiche la liste des réseaux de communication accessibles par le terminal parmi lesquels l'utilisateur doit sélectionner celui qui permet d'atteindre le contenu. Ce n'est qu'une fois la connexion établie avec la plateforme que l'utilisateur peut consulter un ensemble de contenus disponibles. Et ce n'est qu'à la suite d'une recherche du service, par exemple, par un moteur de recherche, que l'utilisateur accède effectivement au service désiré.

On note aussi que l'accès au contenu désiré nécessite préalablement sa connaissance par l'utilisateur. Si l'utilisateur n'en a pas connaissance, ce dernier aura peu de chance d'accéder au service et de bénéficier de ses avantages.

Étant donné qu'un réseau d'accès GPRS/UMTS-PS donne accès à plusieurs réseaux de communication, l'utilisateur doit par conséquent connaître préalablement le réseau de communication à partir duquel le contenu est accessible, car les réseaux de communication sont disjoints deux à deux, empêchant qu'un contenu se trouvant sur un réseau de communication puisse être accédé à partir d'un autre.

Par conséquent, l'accès à des contenus multimédias (ex. services de type GPRS et/ou UMTS) avec ce type de solution est relativement long, compliqué et aléatoire pour l'utilisateur, ce qui pénalise le développement de tels services.

En outre, la consultation et la sélection des services ou contenus multimédias se fait à partir d'une interface utilisateur propriétaire du constructeur du terminal, comme décrit par exemple par la demande de brevet européen EP 0 719 045 A2.

Il n'y a pas de possibilité pour l'opérateur auprès duquel l'utilisateur a souscrit un abonnement d'uniformiser ou de personnaliser le menu dans lequel il propose des services.

### Objet et description succincte de l'invention

La présente invention a pour objet de pallier ces inconvénients en proposant de mettre à disposition de l'utilisateur un moyen simple et ne nécessitant aucune connaissance technologique pour accéder à des contenus multimédias qui nécessite habituellement des connaissances technologiques élevées pour leur mise en oeuvre et leur paramétrage sur le terminal. Les contenus multimédias peuvent être de toutes natures et notamment des contenus multimédias riches tels que des pages Web, des vidéos, etc.

Ce but est atteint par un procédé de gestion de contenus multimédias, selon la revendication 1.

Ainsi, grâce au procédé de l'invention, la consultation, la sélection et le lancement d'un contenu multimédia sont grandement simplifiés pour l'utilisateur du terminal. En effet, les contenus sont présentés à l'utilisateur sous la forme d'un menu correspondant à un document électronique, ce qui permet d'offrir de nombreuses possibilités de présentation des contenus (ex. icônes, noms commerciaux, etc.) sous une forme facilement intelligibles pour l'utilisateur. En outre les opérations à effectuer pour le lancement d'un contenu multimédia par l'utilisateur sont réduites au minimum, à savoir, dans la plupart des cas, à la simple sélection d'un contenu affiché à l'écran du terminal.

Avec la solution proposée par l'invention, l'opérateur a la possibilité de regrouper et d'organiser ("packager") au sein du dispositif de sécurité toutes les données nécessaires à l'accès et à la publication des contenus multimédias de manière à diminuer les diffcultés d'accessibilité qui empêcheraient l'utilisateur d'accéder simplement et de façon intuitive à ces contenus de haute technicité.

Grâce à l'invention, l'opérateur peut aussi s'affranchir des opérations de maintenance d'ordinaire nécessaires lors d'une modification de paramétrage pour l'accès aux contenus, ce qui assure l'accessibilité aux contenus même en cas de changement de paramétrage. En effet, avec les systèmes actuels, tout changement de paramètre nécessite une intervention de l'utilisateur qui opère par lui-même ces modifications de maintenance et qui peuvent devenir très rapidement fastidieuses car réclamant des connaissances technologiques ou de paramétrage complexes.

Le procédé de l'invention apporte aussi à l'utilisateur une garantie "opérateur" pour les contenus auxquels il accède, garantissant que lesdits contenus ont été approuvés par l'opérateur tant sur le plan technique (bon fonctionnement, accès sécurisé, etc.) que sur le plan tarifaire (facturation facilement estimable et sans surprise). Les contenus multimédias sont soumis à un fort piratage et à malversations, comme sur l'Internet aujourd'hui. Le manque de confiance dans l'accès aux contenus nuit très fortement aux développements commerciaux, le commerce ayant besoin d'un lien de confiance pour s'établir. En utilisant un dispositif de sécurité, telle que la carte UICC, géré par le tiers de confiance qu'est l'opérateur, l'invention permet de mettre en place un accès de confiance aux contenus data, ce qui facilite leur développement commercial.

Dans l'étape f) du procédé de l'invention, le dispositif de sécurité transmet au système d'exploitation du terminal une commande d'ouverture de connexion vers le réseau de communication identifié dans l'ensemble des données du contenu multimédia sélectionné et, en réponse à la confirmation de la connexion au réseau de communication, une commande de publication du contenu multimédia sur le terminal.

Ainsi, toutes les actions nécessaires à l'accès et au lancement d'un contenu sont gérées automatiquement par le dispositif de sécurité qui envoie au terminal des commandes d'exécution complètes à partir des données enregistrées sur le dispositif de sécurité. Cette commande peut prendre notamment en compte tous les paramètres techniques (matériel et réseau) nécessaires à la mise en oeuvre du contenu ainsi que le niveau de droit (authentification) dont doit bénéficier l'utilisateur pour y accéder.

Selon un aspect de l'invention, le procédé comprend en outre une étape de téléchargement de nouveaux ensembles de données et une étape de vérification desdits ensembles de données téléchargés, le dispositif de sécurité mettant à jour la base de données des contenus avec ces nouveaux ensembles de données en cas de vérification positive. Cette mise à jour peut consister à modifier des données d'un ou plusieurs ensembles de données relatifs à un ou plusieurs contenus multimédias déjà présents dans la base, et/ou à enregistrer un ou plusieurs ensembles de données correspondant à de nouveaux contenus multimédias, et/ou supprimer un ou plusieurs ensembles de données de la base.

Ainsi, les opérateurs ont la possibilité de mettre à jour les contenus multimédias qu'ils proposent à leurs clients indépendamment du type de terminal mobile utilisé, et ce de façon fiable car le dispositif de sécurité vérifie préalablement tout nouveau téléchargement de données relatives à un contenu avant de le proposer à l'utilisateur via le menu des contenus.

L'objet de l'invention est également atteint grâce un dispositif de sécurité selon la revendication 8.

Selon un aspect de l'invention, le dispositif de sécurité comprend en outre des moyens pour vérifier les ensembles de données téléchargés sur le dispositif de sécurité et pour mettre à jour une base de données des contenus avec ces nouveaux ensembles de données en cas de vérification positive, la mise à jour de la base de données des contenus consistant à modifier des données d'un ou plusieurs ensembles de données relatifs à un ou plusieurs contenus multimédias déjà présents dans la base, et/ou à enregistrer un ou plusieurs ensembles de données correspondant à de nouveaux contenus multimédias, et/ou supprimer un ou plusieurs ensembles de données de la base.

L'invention concerne également un terminal mobile équipé d'une interface utilisateur comprenant au moins des moyens d'affichage et de sélection, caractérisé en ce qu'il comprend un dispositif de sécurité tel que décrite précédemment.

Les données d'un ensemble de données pour chaque contenu multimédia sont enregistrées dans le dispositif de sécurité sous le formatage ou classement de niveaux suivant:
- niveau 0 comprenant les données d'identification du contenu;
- niveau 1 comprenant le type de réseau d'accès au contenu multimédia;
- niveau 2 comprenant l'identifiant du réseau de communication pour accéder au contenu multimédia;
- niveau 3 comprenant les informations sur l'authentification requise pour l'accès audit réseau;
- niveau 4 comprenant les ressources requises pour la publication du contenu multimédia;
- niveau 5 comprenant l'identifiant d'accès du contenu multimédia;
- niveau 6 comprenant l'identification de l'application à exécuter pour la publication du contenu multimédia sur le terminal.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique de l'architecture matérielle et logicielle des éléments d'un système mettant en oeuvre le procédé de gestion d'accès à des contenus multimédias selon l'invention,
- la figure 2 est un ordinogramme d'un mode de mise en oeuvre d'une procédure de publication de menu de contenus conformément à un mode de réalisation de l'invention,
- la figure 3 est un ordinogramme d'un mode de mise en oeuvre d'une procédure d'exécution conformément à un mode de réalisation de l'invention,
- la figure 4 est un ordinogramme d'un mode de mise en oeuvre d'une procédure de vérification conformément à un mode de réalisation de l'invention.

### Description détaillée des modes de réalisation de l'invention

La présente invention propose une solution pour permettre à un utilisateur de terminal de sélectionner et de lancer de façon simple et rapide des services (ex. services GPRS et UMTS ou équivalents) et qui seront dans la suite du texte simplement dénommés "contenus multimédias". Dans la présente description, un contenu multimédia fait référence à tous types d'échange d'information conduisant à une communication tels qu'un appel téléphonique, un fax, une page contenant des informations (telle qu'une page Web), un message électronique, une vidéo ou un film, un logiciel téléchargé (tel qu'un jeu, un outil de carte routière, un logiciel de paiement...), des données transmises en flux continus (appelé aussi streaming) tel que la télévision, la radio, des données diffusées telles que la télévision, une publicité, le teletext...

Par ailleurs, l'invention s'applique à tout terminal disposant d'un dispositif de sécurité géré par un tiers de confiance qui en a la propriété ou la jouissance. Cet élément de sécurité peut être la carte UICC du téléphone mobile (aussi appelée carte SIM ou carte USIM), un composant électronique, amovible ou non, disposé dans un terminal tel que, par exemple, un téléphone portable, un téléphone fixe, une télévision, une véhicule (automobile, train,...), un équipement d'accès à un réseau de services comme un décodeur audiovisuel, équipement électroménagers etc.

Par souci de simplification, dans la suite de la description, on prendra un exemple dans lequel le terminal de l'utilisateur est un téléphone portable, le dispositif de sécurité est une carte UICC, le tiers de confiance est un opérateur de télécommunication (ex. Orange™) et le réseau accédé est un réseau data GPRS/UMTS.

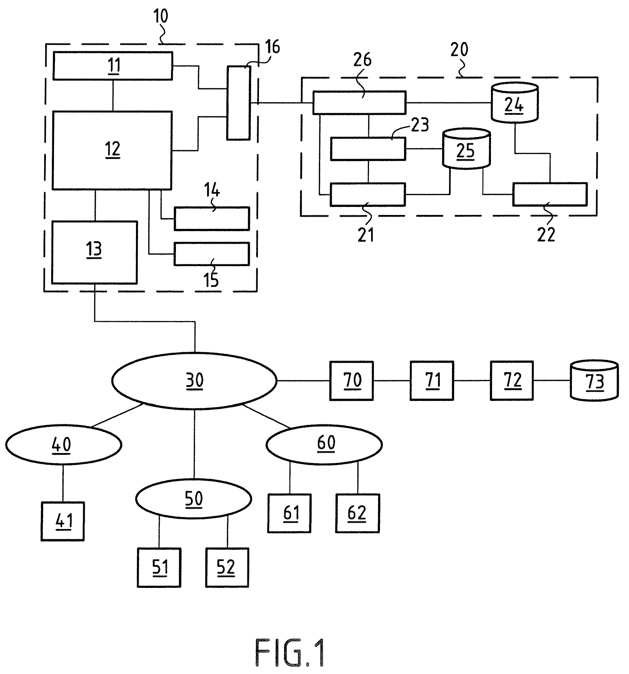

La figure 1 illustre une architecture dans laquelle l'invention peut être mise en oeuvre. Cette architecture comprend notamment:
- un terminal 10,
- un dispositif de sécurité 20,
- un réseau d'accès 30, accessible par le terminal et donnant accès aux réseaux de communication,
- un (des) réseau(x) de communication 40, 50, 60 donnant respectivement accès à des contenus multimédias 41, 51, 52, 61 et 62.

Le terminal 10 et le dispositif de sécurité 20 communiquent via une interface 16, 26. Par exemple dans le cas du mobile, cette interface est standardisée par l'ETSI (Institut Européen des Normes de Télécommunication). Son accès via des API (interfaces applicatives) est aussi standardisé, on donnera en exemple la recommandation JSR177 définie par le Java™ Forum.

Le dispositif de sécurité 20 comprend trois applications: une application "menu" 21 (publication du menu), une application "vérificateur" 22 et une application "exécuteur" 23 (publication du contenu multimédia) pouvant être implémentées sous la forme d'un composant électronique programmé. Il comprend en outre un espace mémoire 24 pour le transfert de fichiers et une base de données des contenus 25 (la base de données pouvant être un fichier). La réalisation des trois applications peut être faite par exemple en Java™ pour les dispositifs de sécurité disposant d'une machine virtuelle Java™.

Le terminal 10 comprend une interface utilisateur 11, un système d'exploitation 12, une interface réseau d'accès 13 et éventuellement des applications 14, 15 permettant la publication de contenus.

Le réseau d'accès 30 est le réseau permettant au terminal d'accéder au(x) réseau(x) de communication 40, 50, 60.

Dans certaines technologies de réseau, le réseau d'accès et le réseau de communication sont confondus dans un seul et même réseau : c'est le cas par exemple des réseaux téléphoniques fixes (RTC).

Dans d'autres technologies de réseau, le réseau d'accès et le(s) réseau(x) de communication sont disjoints : c'est le cas par exemple du réseau GPRS.

Enfin, chaque contenu multimédia est accessible depuis le réseau de communication correspondant, par exemple, via un serveur applicatif dans le cas de contenus Web ou via un poste téléphonique dans le cas d'un appel téléphonique.

Le procédé de l'invention met en oeuvre trois procédures principales: une procédure de publication du menu, une procédure d'exécution du contenu multimédia et une procédure de vérification.

La procédure de publication est mise en oeuvre par l'application "menu" 21 sur le dispositif de sécurité 20 et produit un document informatique appelé "menu des contenus", affichable par l'interface utilisateur du terminal et permettant la sélection d'un contenu par l'utilisateur parmi ceux publiés dans le menu des contenus. La sélection conduit à l'exécution dudit contenu sélectionné. L'application "menu" exécute la procédure de publication décrite ci-après.

La procédure d'exécution ou de publication du contenu multimédia est mise en oeuvre par l'application "exécuteur" 23 sur le dispositif de sécurité 20 et lance la procédure d'exécution du contenu permettant audit contenu d'être accessible par l'utilisateur. La procédure d'exécution est décrite ci-après.

La procédure de vérification consiste à télécharger de nouvelles données relatives aux contenus afin d'enrichir le menu des contenus. L'arrivée de nouvelles données active l'application "vérificateur" 22 ayant pour objet de valider la cohérence des données et d'opérer la maintenance de la base de données des contenus 25 où sont stockées les données de contenu nécessaire à la fabrication du menu des contenus.

Dans la présente invention, un contenu multimédia est défini à partir d'un ensemble de données qui sont classées ou formatées par "niveaux" :
- le niveau 0 décrit les données commerciales du contenu, telles que son nom commercial, son logo, sa vidéo ou signe représentatif d'une marque ou de son usage, sa signature sonore représentative d'une marque ou de son usage, un identifiant du contenu indépendant de son nom, le type de contenu (bancaire, loisir...)...etc. Le niveau 0 peut contenir des données sous la forme de données brutes ou de fichier (ex. fichier image, son, etc.).
- le niveau 1 décrit le type réseau d'accès permettant l'accès au contenu. Les types de réseau d'accès sont très nombreux, on peut citer par exemple l'accès circuit RTC (téléphone fixe), l'accès data ADSL, l'accès circuit GSM, l'accès circuit UMTS, l'accès data GSM-Data (GSM-CSD), l'accès data GPRS/UMTS-PS, l'accès data Irda (infrarouge), l'accès data Bluetooth™ (technologie de lien série par voie radio), etc.
- le niveau 2 décrit l'identifiant du réseau de communication pour accéder au contenu. Le renseignement de ce niveau est conditionné par la valeur du niveau 1 car la plupart des types réseau d'accès ne permettent l'accès qu'à un seul réseau de communication : c'est par exemple le cas des réseaux circuit (RTC, GSM) et des réseaux série (Irda...). Ainsi pour ces types d'accès réseau, le niveau 2 n'est pas renseigné. Les types d'accès réseau permettant l'accès à plusieurs réseaux sont, par exemple, le GPRS/UMTS-PS qui identifie un réseau de communication parmi l'ensemble accessible par un identifiant appelé « *APN* »*,* le GSM-Data qui identifie le réseau par un identifiant de type numéro téléphone E164, etc.
- le niveau 3 décrit l'authentification requise pour l'accès au réseau. Le renseignement de ce niveau est conditionné par la valeur du niveau 1 car la plupart des types d'accès réseau ne gèrent pas d'authentification à l'accès. En effet, l'accès à certains réseaux peut être conditionné à une authentification forte de type (login/mot de passe). Ceci est par exemple le cas pour certains accès à des réseaux de communication identifié par un APN.
- le niveau 4 décrit les ressources requises à l'exécution du contenu. Ces ressources concernent le terminal et le réseau permettant l'accès au contenu.
- le niveau 5 décrit l'identifiant du contenu. Le contenu est identifié par une adresse dépendante du réseau de communication permettant l'accès au contenu. Par exemple, en RTC ou GSM, le contenu est identifié par le numéro téléphonique E164. En GPRS/UMTS-PS et pour un APN réclamant un adressage IP, le contenu peut être identifié par une adresse physique IP ("Internet Protocol" standardisé par l'IETF (Internet Engineering Task Force)) ou une adresse logique URI ("Uniform Ressource Identifier" standardisé par l'IETF), etc.
- le niveau 6 décrit l'identifiant de l'application à exécuter qui permette le lancement ou la publication du contenu sur le terminal. Par exemple, si le contenu est un film, l'application sera un lecteur de film. Si le contenu est une page Web, l'application sera un navigateur Web, etc. Le renseignement de ce niveau est facultatif car la plupart des systèmes d'exploitation savent automatiquement sélectionner l'application de publication en fonction du contenu qui leur est soumis. Néanmoins, ce niveau peut être utile quand il existe une volonté de forcer la publication sur une application de publication particulière, et ce pour garantir le résultat rendu à l'utilisateur. Car, si l'on prend le seul exemple du navigateur Web, chaque navigateur possède ses particularités et la publication du contenu sur un navigateur non valide peut conduire à une publication partielle, voire à aucune publication, ce qui est très préjudiciable et peut avoir des conséquences contractuelles (ou commerciales) surtout dans le cas de contenus payants.

### Procédure de publication du menu

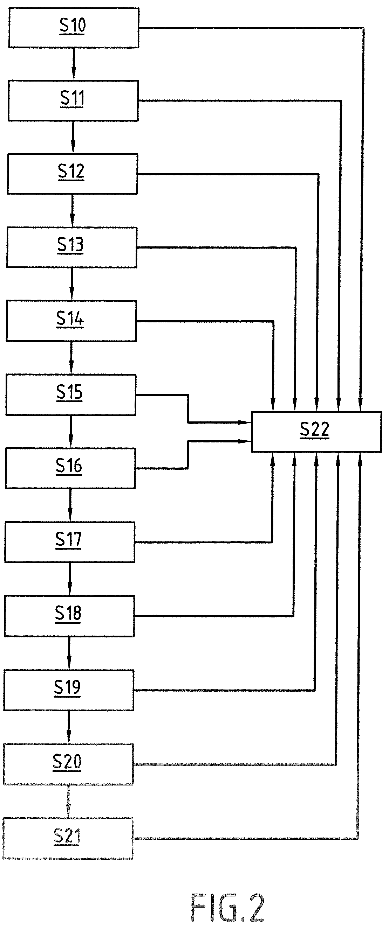

Le déroulement de la procédure de publication du menu est le suivant (cf. figure 2):
- Étape S10: l'interface utilisateur (IU) 11 du terminal 10 met en évidence sur le terminal un lien donnant accès au "menu des contenus". Par exemple, ce lien peut être un bouton sur le clavier du terminal, une balise ou une icône cliquable affichée sur l'écran du terminal.
- Étape S11: l'utilisateur active le lien du menu des contenus.
- Étape S12: l'IU demande à l'application "menu" 21 du dispositif de sécurité 20 de lui transmettre les données relatives au menu des contenus. Ces données sont contenues dans un document informatique dont le format est publiable par l'IU. Par exemple dans le cas d'une solution Web, le menu des contenus est identifié par une URI du type « dispositif_de_sécurité:\menu-des-contenus.htm »
- Étape S13: l'application "menu" 21 extrait le niveau 0 de tous les contenus de la base de données des contenus 25.
- Étape S14: à partir de ces données, l'application "menu" met en forme et publie le menu des contenus sous la forme d'un document informatique dont le format est publiable par l'IU.
- Étape S15: l'application "menu" transmet à l'IU le document informatique.
- Étape S16: l'IU publie le document informatique qui apparaît sous la forme du menu des contenus.
- Étape S17: l'utilisateur sélectionne un contenu dans le menu des contenus.
- Étape S18: l'IU transmet à l'application "menu" des informations permettant de déduire l'identité du contenu sélectionné. En effet, dans un exemple d'une solution, le contenu sera défini dans le menu des contenus par un élément de navigation Web de type "server-side-maps" permettant d'identifier le contenu par ses coordonnées (X,Y) dans la page Web. Bien évidemment, selon la solution d'implémentation, les informations pour identifier le contenu peuvent varier.
- Étape S19: l'application "menu" déduit de ces informations l'identifiant du contenu.
- Étape S20: l'application "menu" 21 lance l'application "exécuteur" 23 en transmettant comme paramètre d'exécution l'identifiant du contenu. (cf. procédure d'exécution).
- Étape S21: à la fin de l'exécution de l'application "exécuteur", l'application "menu" récupère la main et réaffiche le menu des contenus. L'utilisateur peut sélectionner un nouveau contenu.

Si une des étapes précédentes échoue, l'application "menu" met fin à la procédure de publication du menu (étape S22).

### Procédure d'exécution (publication du contenu multimédia)

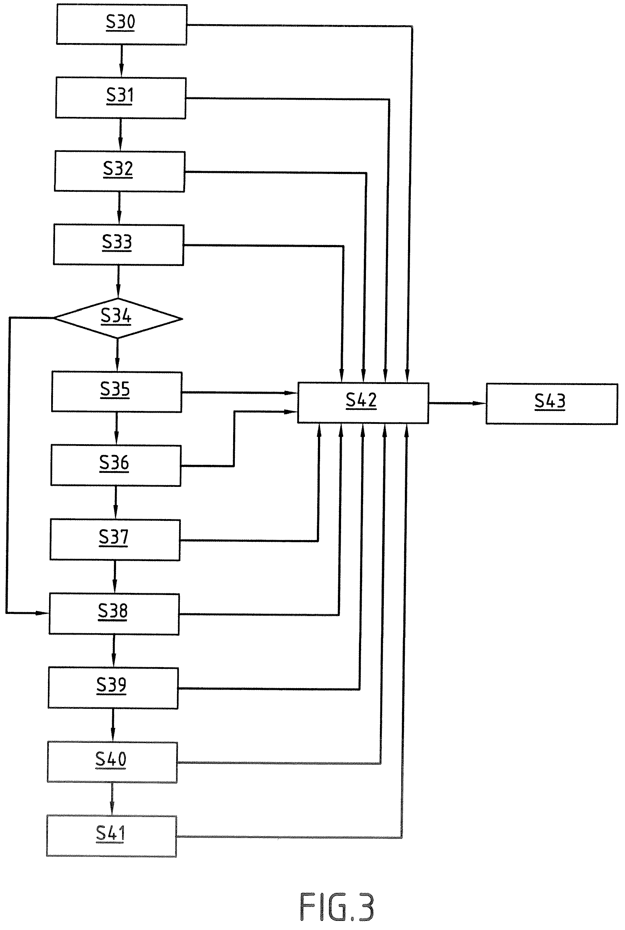

Le déroulement de la procédure d'exécution est le suivant (cf. figure 3):
- Étape S30: l'application "menu" 21 lance l'application "exécuteur" 23 sur le dispositif de sécurité 20, en passant en paramètre d'exécution l'identité du contenu.
- Étape S31: l'application "exécuteur" recherche les données relatives audit contenu dans la base de données des contenus 25.
- Étape S32: l'application "exécuteur" déduit des niveaux 1, 2 et 3 la procédure et le format de la demande d'ouverture d'accès au réseau de communication auprès du réseau d'accès 30.
- Étape S33: l'application "exécuteur" transmet au système d'exploitation 12 du terminal 10 la demande d'ouverture d'accès pour initialiser l'accès à un réseau de communication.
- Étape S34: le système d'exploitation détermine si une authentification est demandée à l'ouverture de l'accès.
- Étape S35: si une authentification est demandée, le système d'exploitation retransmet la demande à l'application "exécuteur".
- Étape S36: l'application "exécuteur" déduit du niveau 4 la réponse à donner à la demande d'authentification résultante à la demande d'ouverture.
- Étape S37: si aucune demande d'authentification ne résulte de la demande d'ouverture alors que le niveau 4 est renseigné ou, a contrario, s'il y a une demande d'authentification résultante de la demande d'ouverture alors que le niveau 4 n'est pas renseigné, l'application "exécuteur" va directement à l'étape d'échec S42 qui produit un message d'erreur (étape S43). Dans les autres cas, l'application transmet la réponse à la demande d'authentification au système d'exploitation qui se charge de la transmettre à l'interface au réseau d'accès 13.
- Étape S38: en retour d'une authentification positive ou lorsque aucune authentification n'a été demandée, le système d'exploitation confirme à l'application "exécuteur" le résultat de l'ouverture de la connexion au réseau d'accès.
- Étape S39: l'application "exécuteur" déduit des niveaux 5 et 6 la procédure et le format de la demande de publication du contenu. Si le niveau 6 est renseigné, celle-ci est imposée pour la publication dudit contenu. A contrario, si le niveau 6 n'est pas renseigné alors l'application "exécuteur" laisse au système d'exploitation le choix de l'application pour publier le contenu.
- Étape S40: lancement de la publication du contenu.
- Étape S41: le système d'exploitation confirme à l'application "exécuteur" la publication du contenu.

Si une des étapes précédentes échoue, l'application "exécuteur" met fin à la procédure de publication du menu (étape S42) et affiche un message d'erreur sur l'interface utilisateur du terminal (étape S43) précisant l'échec de la publication du contenu spécifié par son nom qui est issu du niveau 0 de l'ensemble de données de ce dernier enregistré dans la base des contenus.

### Procédure de vérification

La procédure de vérification est mise en oeuvre lors de nouveaux téléchargements d'ensemble de données de contenus multimédias.

Le téléchargement de données est bien connu en soi et peut être réalisé de différentes façons. A titre illustratif, on décrit l'exemple d'un téléchargement dans un environnement de réseau mobile. Il est possible de mettre en place un téléchargement depuis une borne, depuis une mémoire amovible, etc.

Dans le réseau de l'opérateur ayant en charge les services, une base de données 73 (cf. figure 1) contient les données ou ensembles de données des "menus des contenus" de tous les abonnés. Quand les données du "menu des contenu" d'un abonné sont modifiées, la base de données met à jour ses données et alimente une base de données temporaires 72 contenant les contenus modifiés.

Une application de téléchargement 71 scrute périodiquement la base de données temporaire 72. Si celle-ci n'est pas vide, il réalise à partir des données qui y sont contenues un fichier à télécharger pour chaque dispositif de sécurité du terminal de l'abonné. Dans le monde mobile, l'abonné est identifié par son IMSI ou bien son MSISDN, 2 identifiants standardisés par l'ETSI et interprétable par le réseau d'accès mobile.

L'application 71 transmet le(s) fichier(s) à une plate-forme de téléchargement 70 qui envoie automatiquement les fichiers vers les destinataires.

Par exemple, les méthodes de téléchargement sécurisé sont standardisées dans le cas d'un terminal mobile dont le dispositif de sécurité est une carte UICC ; ces méthodes standardisées sont BIP (Bearer Independent Protocol), OTA (Over The Air), etc.

Les données téléchargées sont stockées dans l'espace mémoire 24 réservée au téléchargement, tel que le fichier "S-SMS" pour la méthode OTA, attendant d'être traitées. Dans le cas de la méthode OTA, la norme prévoit que les champs paramétrables sur un SMS pour spécifier l'usage des données contenues dans le SMS. Ainsi, par cette méthode il est possible de spécifier que les données sont relatives au menu des contenus. Dans le cas de la méthode BIP, le fichier transféré contient un identifiant représentatif d'un fichier de contenus (telle qu'une extension de fichier spécifique).

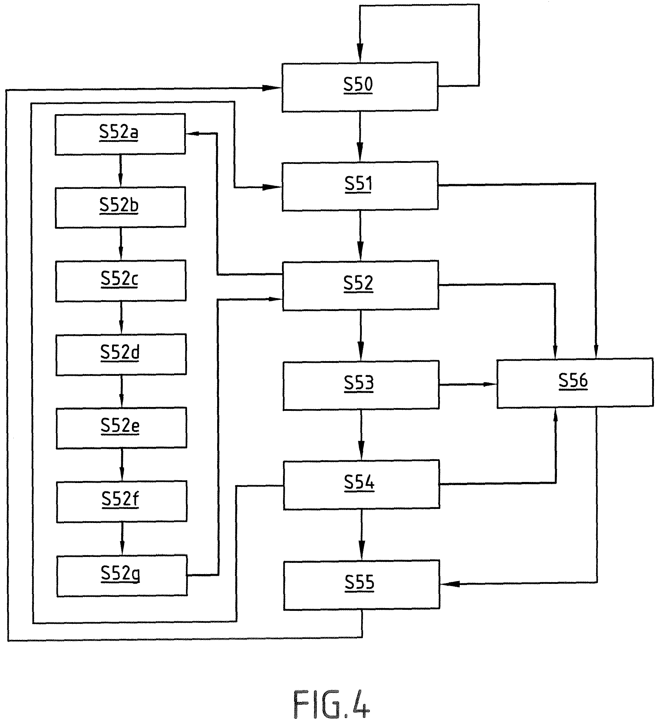

Le déroulement de la procédure de vérification est le suivant (cf. figure 4):
- Étape S50: l'application "vérificateur" 22 est une application sur le dispositif de sécurité 20 en attente de nouveaux téléchargements. Périodiquement, l'application "vérificateur" scrute les nouveaux fichiers téléchargés sur l'espace mémoire de téléchargement pour déceler la présence de nouvelles données de contenu. Elle vérifie que le fichier issu du téléchargement contient des données de contenus. Si c'est le cas, elle entame la procédure de vérification.
- Étape S51: l'application "vérificateur" extrait les données du premier contenu non traité du fichier.
- Étape S52: la vérification des données téléchargées et relatives à un contenu se fait comme suit :
   - Étape S52a: vérification du niveau 0: l'application "vérificateur" vérifie que le niveau 0 n'est pas vide et contient au minimum un identifiant de contenu et un nom commercial.
   - Étape S52b: vérification du niveau 1: l'application "vérificateur" extrait le type de réseau d'accès indiqué. Optionnellement, il interroge le système d'exploitation du terminal pour savoir si le type réseau d'accès est disponible sur le terminal.
   - Étape S52c: vérification du niveau 2: l'application "vérificateur" vérifie que l'identifiant réseau renseigné au niveau 2 est homogène avec le type réseau d'accès renseigné en niveau 1.
   - Étape S52d: vérification du niveau 3: l'application "vérificateur" vérifie que l'authentification renseignée au niveau 3 est homogène avec le type d'accès réseau renseigné en niveau 1.
   - Étape S52e: vérification du niveau 4: l'application "vérificateur" vérifie que le terminal possède un dispositif de gestion des ressources et que les ressources demandées par le contenu multimédia sont allouables par le terminal. Cette dernière vérification permet de retirer du menu tous les contenus multimédias qui ne sont pas publiables sur le terminal par manque de ressources suffisantes. Si les ressources ne sont pas renseignées, alors le contenu demande un accès "pour le mieux" (aussi appelé "best effort") sans garantie de résultat. Auquel cas, l'application "vérificateur" ne procède à aucune vérification de ressources. Si les ressources requises pour le contenu ne sont pas allouables par le terminal, alors le contenu est supprimé de la base de données.
   - Étape S52f: vérification du niveau 5: l'application "vérificateur" vérifie que l'identifiant du contenu est homogène avec le type d'accès réseau renseigné en niveau 1. Par exemple, dans un réseau d'accès téléphonique (RTC), l'identifiant du contenu doit avoir le format d'un numéro téléphonique E164.
   - Étape S52g: vérification du niveau 6: l'application "vérificateur" vérifie que l'application de publication est disponible sur le terminal en interrogeant le système d'exploitation du terminal.
- Étape S53: si toutes les vérifications sont passées avec succès, alors l'application "vérificateur" met à jour la base de données des contenus 25, sinon il passe directement au traitement du contenu suivant (étape S54). La base de données des contenus prévoit 3 actions de maintenance :
   a. étape modification : la mise à jour consiste à rechercher dans la base si un contenu possédant un identifiant de contenu identique existe déjà, de supprimer les données de ce contenu de la base de données puis de renseigner dans la base les nouvelles valeurs des données du contenu traitées précédemment par la procédure de vérification.
   b. étape création : la mise à jour consiste à rechercher dans la base si un contenu possédant un identifiant de contenu identique existe déjà. Si l'identifiant du contenu n'existe pas dans la base de données alors les valeurs des données du contenu traitées précédemment par la procédure de vérification sont renseignées dans la base.
   c. étape suppression : si les nouvelles données d'un contenu sont nulles du niveau 1 à 6, alors la mise à jour consiste à rechercher dans la base si un contenu possédant un identifiant de contenu identique existe déjà et de supprimer les données de ce contenu de la base de données.
- Étape S54: l'application "vérificateur" passe à la vérification du contenu suivant dans fichier téléchargé et passe directement à l'étape S51. S'il n'y a plus de contenu à traiter, l'application passe à l'étape S55.
- Étape S55: à l'issue du traitement du fichier, l'application "vérificateur" supprime ledit fichier, et repasse à l'étape S50 pour attendre l'arrivée du prochain fichier téléchargé.

Si une des étapes précédentes échoue, l'application "vérificateur" met fin à la procédure de publication du menu (étape S56) et passe directement à l'étape S55.

On décrit maintenant un exemple de faisabilité de la présente invention appliqué à un terminal muni d'un navigateur ("browser") Web NG (nouvelle génération).

Dans un terminal possédant un navigateur NG, le navigateur, qui gère la partie haute du système d'exploitation, sert d'interface entre les interfaces du terminal (en particulier l'interface au réseau d'accès) et les applications qui en demandent l'accès. Cette méthode d'architecture présente l'avantage de faire en sorte d'uniformiser le comportement des terminaux : tous les terminaux réagissent de façon identique et sont accessibles de la même manière. En effet, en temps normal, les terminaux possèdent des systèmes d'exploitation différents, ce qui impose pour y accéder d'adapter toutes les demandes d'accès à chaque système d'exploitation, ce qui est matériellement impossible. Par ailleurs, dans le cas de système d'exploitation inconnu, cela ne fonctionnerait pas.

L'interface utilisateur du terminal est une application Web (i.e. application écrite à l'aide des langages Web). Par ce choix d'implémentation, son accès par d'autres applications est standardisé et donc simplifié.

L'accès à chaque interface du terminal se fait à l'aide d'une "DOM API", interface applicative (API) écrite selon le langage Web DOM ("Document Object Model"). Comme indiqué précédemment, l'accès à une interface quelconque du terminal est simplifié car standardisé via le langage DOM.

Le dispositif de sécurité est une carte UICC possédant une machine virtuelle Java™. Les applications "menu", "vérificateur" et "exécuteur" sont des applets Java™. L'espace mémoire de téléchargement est un espace de la mémoire flash de l'UICC réservé à cet usage.

La base de données des contenus est un fichier. Pour permettre l'extraction des données des contenus, le codage de ce fichier se fait par exemple selon le protocole suivant (codage exprimé en hexadécimal) :
- le fichier est codé en ASCII
- le début des données d'un contenu est repéré par le niveau 0 du contenu et spécifié par la suite par 2 octets : « FF » → « 00 »
- le début des données des niveaux du contenu est identifié par 2 octets : « FF » → « numéro du niveau »
- pour les niveaux disposant de plusieurs champs, le début des données des champs est identifié par 2 octets : « FF » → « numéro du champ »
   ∘ le numéro du champ est strictement supérieur à « 10 »
   ∘ par exemple, pour le niveau 0, on aurait les identifiants des champs :
      ▪ « 10 » : identifiant du contenu
      ▪ « 11 » : nom commercial du contenu
      ▪ « 12 » : logo ou image du contenu
      ▪ ...

La valeur des champs renseignés ne peut pas contenir l'octet « FF ». Les fichiers téléchargés possèdent le même formatage.

L'opérateur télécharge sur l'espace mémoire de téléchargement du dispositif de sécurité un fichier de mise à jour des contenus. Le téléchargement se fait par exemple par le protocole BIP de l'ETSI.

Périodiquement, l'application "vérificateur" inspecte la présence d'un fichier sur l'espace mémoire de téléchargement, découvre le fichier téléchargé et s'assure via son extension que le fichier correspond à des données de contenus. L'application "vérificateur" extrait les données des contenus et met à jour la base de données des contenus du dispositif de sécurité puis, une fois l'extraction terminée, elle détruit le fichier et attend le prochain téléchargement.

La page par défaut de l'interface utilisateur du terminal possède un lien donnant accès au menu des contenus. L'utilisateur en activant ce lien, exécute l'application "menu" sur le dispositif de sécurité. L'application "menu" extrait les niveaux 0 des contenus, et produit une page Web contenant l'accès à chacun des contenus et représentative du menu des contenus. L'accès à un contenu est, par exemple, défini par l'élément de navigation Web "server-side-maps". L'application "menu" transfert la page Web à l'interface utilisateur pour qu'elle la publie sur le terminal. L'utilisateur, en sélectionnant l'un des éléments de navigation Web "server-side-maps" définissant les contenus multimédias sur la page Web, commande l'envoi, par l'interface utilisateur, d'un message à l'application "menu" contenant les coordonnées du contenu (X,Y) sur la page Web. L'application "menu" déduit des coordonnées l'identifiant du contenu et lance l'application "exécuteur" avec comme paramètre d'exécution l'identifiant du contenu.
L'application "exécuteur" extrait de la base de données des contenus les données correspondant à l'identifiant du contenu qui lui a été communiqué. Des niveaux 1, 2 et 3, il déduit la commande pour ouvrir une connexion vers le réseau de communication spécifié par le contenu.

La commande prend la forme d'un document informatique, de type page Web interactive écrite en langage DOM et contient toutes les informations pour que le navigateur Web puisse les interpréter et exécuter la procédure de connexion sur la "DOM API" gérant l'interface réseau d'accès. Si la procédure de connexion réclame une authentification, la "DOM API" renvoie, via le navigateur Web et vers l'application "exécuteur", un message (par exemple sous la forme d'un message SOAP (SOAP est un protocole Web standardisé)) demandant le login/mot de passe. L'application "exécuteur" répond en retour le login/mot de passe contenu dans le niveau 4. A l'issue de la procédure de connexion, la "DOM API" informe, via le navigateur Web, l'application "exécuteur" du résultat de la procédure. Si la connexion a été réalisée, l'application "exécuteur" déduit des niveaux 5 et 6 la commande pour publier le contenu. Dans la solution Web donné ici en exemple, le niveau 5 contient l'URI du contenu multimédia a publié « www.orange.com/bourse.htm ». Le niveau 6 contient l'URI de l'application permettant la publication du contenu « www.outil.com/browser/browserNG.exe ». Dans une architecture de navigateur Web NG, l'application de publication est le plus souvent une application Web qui peut ne pas être disponible sur le terminal ; auquel cas, elle est téléchargée préalablement, avant de procéder à la publication du contenu.

A l'issue de la publication du contenu, le menu des contenus réapparaît pour que l'utilisateur puisse sélectionner un nouveau contenu.

Le contenu multimédia contenu dans le niveau 5 peut être de tout type : un appel téléphonique, une page Web, une video, un fax, etc.

Par ailleurs, l'usage d'un navigateur Web comme interface utilisateur avec un adressage de type URI pour l'accès au contenu multimédia n'est qu'un des exemples possibles d'implémentation de l'invention. L'accès au contenu multimédia peut être aussi obtenu, par exemple, par envoi de commandes "shell" (interface de commandes sous Unix™) au système d'exploitation pour joindre l'interface du réseau d'accès. De même, le type d'adressage dépend de la nature du contenu multimédia auquel on souhaite accéder. Par exemple, lorsque le contenu multimédia est un appel voix, l'adressage est de type E164 (et non plus URI).

## Revendications

1. Procédé de gestion de l'accès à des contenus multimédias (41, 51, 52, 61, 62) par un terminal (10) équipé d'un dispositif de sécurité (20) géré par un tiers de confiance, ledit terminal comprenant une interface utilisateur (11) et une application de publication (14,15), ledit dispositif de sécurité (20) étant embarqué dans le terminal, lesdits contenus multimédias étant accessibles par le terminal via un ou plusieurs réseaux de communication (40; 50; 60), le procédé étant **caractérisé en ce qu'**il comprend les étapes suivantes:
a) enregistrement, dans une base de données (25) comprise dans le dispositif de sécurité géré par le tiers de confiance, d'un ensemble de données pour chaque contenu multimédia,
b) création, par le dispositif de sécurité (20) et à partir desdites données enregistrées sur la base de données (25), d'un document informatique correspondant à un menu de contenus multimédias,
c) transmission par le dispositif de sécurité (20) du document informatique à l'interface utilisateur (11),
d) publication du document informatique par l'interface utilisateur (11),
e) sélection d'un contenu multimédia par l'utilisateur à partir du document informatique affiché,
f) publication du contenu multimédia sélectionné par l'application de publication du terminal (10) en réponse à des instructions de commande du dispositif de sécurité (20) et en fonction de l'ensemble des données enregistrées dans le dispositif de sécurité pour le contenu multimédia sélectionné.

2. Procédé selon la revendication 1, **caractérisé en ce que**, dans l'étape a), les données d'un ensemble de données pour chaque contenu multimédia sont enregistrées sous le formatage suivant:
- niveau 0 comprenant les données d'identification du contenu;
- niveau 1 comprenant le type de réseau d'accès (30) au contenu multimédia;
- niveau 2 comprenant l'identifiant du réseau de communication (40; 50; 60) pour accéder au contenu multimédia;
- niveau 3 comprenant les informations sur l'authentification requise pour l'accès audit réseau;
- niveau 4 comprenant les ressources requises pour la publication du contenu multimédia;
- niveau 5 comprenant l'identifiant d'accès du contenu multimédia;
- niveau 6 comprenant l'identification de l'application à exécuter pour la publication du contenu multimédia sur le terminal.

3. Procédé selon la revendication 1 ou 2, **caractérisé en ce que**, dans l'étape f), le dispositif de sécurité (20) transmet au système d'exploitation du terminal (12) une commande d'ouverture de connexion vers le réseau de communication identifié dans l'ensemble des données du contenu multimédia sélectionné et, en réponse à la confirmation de la connexion au réseau de communication, une commande de publication du contenu multimédia sur le terminal (10).

4. Procédé selon la revendication 3, **caractérisé en ce que** la commande de publication comprend des données d'identification d'une application à exécuter pour la publication du contenu multimédia sur le terminal (10).

5. Procédé selon la revendication 3 ou 4, **caractérisé en ce que** la commande d'ouverture de connexion comprend en outre des données d'authentification pour l'accès au réseau de communication.

6. Procédé selon l'une quelconque des revendications 1 à 5, **caractérisé en ce qu'**il comprend en outre une étape de téléchargement de nouveaux ensembles de données et une étape de vérification desdits ensembles de données téléchargés, le dispositif de sécurité (20) mettant à jour la base de données (25) avec ces nouveaux ensembles de données en cas de vérification positive, et **en ce que** la mise à jour de la base de données (25) consiste à modifier des données d'un ou plusieurs ensembles de données relatifs à un ou plusieurs contenus multimédias déjà présents dans la base, et/ou à enregistrer un ou plusieurs ensembles de données correspondant à de nouveaux contenus multimédias, et/ou supprimer un ou plusieurs ensembles de données de la base.

7. Procédé selon l'une quelconque des revendications 1 à 6, **caractérisé en ce que** l'interface utilisateur (11) du terminal (10) est un navigateur web et **en ce que** le document informatique correspondant à un menu de contenus multimédias est identifié par une adresse URI ou URL.

8. Dispositif de sécurité (20) géré par un tiers de confiance et embarqué dans un terminal de communication (10), ledit terminal de communication comprenant une interface utilisateur (11) et une application de publication (14,15) et étant utilisé pour accéder à des contenus multimédias (41, 51, 52, 61, 62) via un ou plusieurs réseaux de communication (40; 50; 60), ledit dispositif de sécurité étant **caractérisé en ce qu'**il comprend :
- une base de données (25), pour mémoriser un ensemble de données pour chaque contenu multimédia,
- des moyens (21) pour créer à partir des données mémorisées dans la base de données (25) un document informatique correspondant à un menu de contenus multimédias ;
- des moyens pour transmettre le document informatique à l'interface utilisateur (11) du terminal afin de publier le menu de contenus multimédias sur le terminal ;
- des moyens (23) pour envoyer des instructions de commande à l'application de publication du terminal pour une publication du contenu multimédia sélectionné à partir du menu affiché sur le terminal (10) en fonction de l'ensemble des données enregistrées dans le dispositif de sécurité pour le contenu multimédia sélectionné.

9. Dispositif selon la revendication 8, **caractérisé en ce que** les données d'un ensemble de données pour chaque contenu multimédia sont mémorisées sous le formatage suivant:
- niveau 0 comprenant les données d'identification du contenu;
- niveau 1 comprenant le type de réseau d'accès (30) au contenu multimédia;
- niveau 2 comprenant l'identifiant du réseau de communication (40; 50; 60) pour accéder au contenu multimédia;
- niveau 3 comprenant les informations sur l'authentification requise pour l'accès audit réseau;
- niveau 4 comprenant les ressources requises pour la publication du contenu multimédia;
- niveau 5 comprenant l'identifiant d'accès du contenu multimédia;
- niveau 6 comprenant l'identification de l'application à exécuter pour la publication du contenu multimédia sur le terminal.

10. Dispositif de sécurité selon la revendication 8 ou 9, **caractérisé en ce qu'**il comprend en outre des moyens (22) pour vérifier les ensembles de données téléchargés sur le dispositif de sécurité (20) et pour mettre à jour la base de données (25) avec ces nouveaux ensembles de données en cas de vérification positive, la mise à jour de la base de données consistant à modifier des données d'un ou plusieurs ensembles de données relatifs à un ou plusieurs contenus multimédias déjà présents dans la base, et/ou à enregistrer un ou plusieurs ensembles de données correspondant à de nouveaux contenus multimédias, et/ou supprimer un ou plusieurs ensembles de données de la base.

11. Terminal mobile (10) équipé d'une interface utilisateur (11) comprenant au moins des moyens d'affichage et de sélection, **caractérisé en ce qu'**il embarque un dispositif de sécurité selon l'une quelconque des revendications 8 à 10.

## Patentansprüche

1. Verwaltungsverfahren des Zugangs zu Multimedia-Inhalten (41, 51, 52, 61, 62) durch ein Endgerät (10), das mit einer Sicherheitsvorrichtung (20), die von einem vertrauenswürdigen Dritten verwaltet wird, ausgestattet ist, wobei das Endgerät eine Benutzeroberfläche (11) und eine Veröffentlichungsanwendung (14, 15) umfasst, wobei die Sicherheitsvorrichtung (20) in dem Endgerät mitgeführt ist, wobei die Multimedia-Inhalte durch das Endgerät über ein oder mehrere Kommunikationsnetze (40; 50; 60) zugänglich sind, wobei das Verfahren **dadurch gekennzeichnet ist, dass** es die folgenden Schritte umfasst:
a) Aufzeichnung in einer Datenbank (25), die in der Sicherheitsvorrichtung, die von dem vertrauenswürdigen Dritten verwaltet wird, enthalten ist, einer Einheit von Daten für jeden Multimedia-Inhalt,
b) Anlegen durch die Sicherheitsvorrichtung (20) und ausgehend von den in der Datenbank (25) aufgezeichneten Daten eines Informatikdokuments, das einem Multimedia-Inhalte-Menü entspricht,
c) Übertragung durch die Sicherheitsvorrichtung (20) des Informatikdokuments zu der Benutzeroberfläche (11),
d) Veröffentlichung des Informatikdokuments durch die Benutzeroberfläche (11),
e) Auswahl eines Multimedia-Inhalts durch den Benutzer ausgehend von dem angezeigten Informatikdokument,
f) Veröffentlichung des durch die Veröffentlichungsanwendung des Endgeräts (10) ausgewählten Multimedia-Inhalts als Antwort auf Steueranweisungen der Sicherheitsvorrichtung (20) und in Abhängigkeit von der Einheit von Daten, die in der Sicherheitsvorrichtung für den ausgewählten Multimedia-Inhalt aufgezeichnet ist.

2. Verfahren nach Anspruch 1, **dadurch gekennzeichnet, dass** die Daten einer Einheit von Daten für jeden Multimedia-Inhalt bei Schritt a) unter der folgenden Formatierung aufgezeichnet werden:
- Niveau 0, das die Identifikationsdaten des Inhalts umfasst,
- Niveau 1, das den Netztyp (30) zum Zugang zu dem Multimedia-Inhalt umfasst,
- Niveau 2, das den Identifikator des Kommunikationsnetzes (40; 50; 60) zum zugreifen auf den Multimedia-Inhalt umfasst,
- Niveau 3, das die Informationen zur Authentifizierung, die für den Zugang zu dem Netz erforderlich ist, umfasst,
- Niveau 4, das die Ressourcen, die für die Veröffentlichung des Multimedia-Inhalts erforderlich sind, umfasst,
- Niveau 5, das den Identifikator des Zugangs zu dem Multimedia-Inhalt umfasst,
- Niveau 6, das die Identifikation der Anwendung umfasst, die für die Veröffentlichung des Multimedia-Inhalts auf dem Endgerät erforderlich ist.

3. Verfahren nach Anspruch 1 oder 2, **dadurch gekennzeichnet, dass** die Sicherheitsvorrichtung (20) bei dem Schritt f) an das Betriebssystem des Endgeräts (12) einen Befehl zum Verbindungsöffnen zu dem Kommunikationsnetz, das in der Einheit der Daten des ausgewählten Multimedia-Inhalts identifiziert ist, und, als Reaktion auf die Bestätigung der Verbindung mit dem Kommunikationsnetz einen Veröffentlichungsbefehl des Multimedia-Inhalts auf dem Endgerät (10) überträgt.

4. Verfahren nach Anspruch 3, **dadurch gekennzeichnet, dass** der Veröffentlichungsbefehl Identifikationsdaten einer Anwendung umfasst, die zur Veröffentlichung des Multimedia-Inhalts auf dem Endgerät (10) auszuführen ist.

5. Verfahren nach Anspruch 3 oder 4, **dadurch gekennzeichnet, dass** der Befehl zur Verbindungsöffnung außerdem Authentifizierungsdaten für den Zugang zu dem Kommunikationsnetz umfasst.

6. Verfahren nach einem der Ansprüche 1 bis 5, **dadurch gekennzeichnet, dass** es außerdem einen Herunterladeschritt neuer Dateneinheiten und einen Prüfschritt der heruntergeladenen Dateneinheiten umfasst, wobei die Sicherheitsvorrichtung (20) die Datenbank (25) mit diesen neuen Dateneinheiten bei positiver Prüfung aktualisiert, und dass die Aktualisierung der Datenbank (25) darin besteht, Daten einer oder mehrerer Dateneinheiten in Zusammenhang mit einem oder mehreren der Multimedia-Inhalte, die bereits in der Datenbank vorhanden sind, zu ändern und/oder eine oder mehrere Dateneinheiten, die neuen Multimedia-Inhalten entsprechen, aufzuzeichnen und/oder eine oder mehrere Dateneinheiten aus der Datenbank zu löschen.

7. Verfahren nach einem der Ansprüche 1 bis 6, **dadurch gekennzeichnet, dass** die Benutzeroberfläche (11) des Endgeräts (10) ein Webbrowser ist, und dass das Informatikdokument, das einem Multimedia-Inhalte-Menü entspricht, durch eine URI- oder URL-Adresse identifiziert ist.

8. Sicherheitsvorrichtung (20), die von einem vertrauenswürdigen Dritten verwaltet wird und in einem Kommunikationsendgerät (10) mitgeführt ist, wobei das Kommunikationsendgerät eine Benutzeroberfläche (11) und eine Veröffentlichungsanwendung (14, 15) umfasst und verwendet wird, um auf Multimedia-Inhalte (41, 51, 52, 61, 62) über ein oder mehrere Kommunikationsnetze (40; 50; 60) zuzugreifen, wobei die Sicherheitsvorrichtung **dadurch gekennzeichnet ist, dass** sie Folgendes umfasst:
- eine Datenbank (25) zum Speichern einer Dateneinheit für jeden Multimedia-Inhalt,
- Mittel (21) zum Anlegen eines Informatikdokuments, das einem Multimedia-Inhalte-Menü entspricht, ausgehend von den in der Datenbank (25) gespeicherten Daten,
- Mittel zum Übertragen des Informatikdokuments zu der Benutzeroberfläche (11) des Endgeräts, um das Multimedia-Inhalte-Menü auf dem Endgerät zu veröffentlichen,
- Mittel (23), um Befehlsanweisungen zu der Veröffentlichungsanwendung des Endgeräts für eine Veröffentlichung des auf dem auf dem Endgerät (10) angezeigten Menü ausgewählten Multimedia-Inhalts in Abhängigkeit von der Dateneinheit, die in der Sicherheitsvorrichtung für den ausgewählten Multimedia-Inhalt aufgezeichnet ist, zu senden.

9. Vorrichtung nach Anspruch 8, **dadurch gekennzeichnet, dass** die Daten einer Dateneinheit für jeden Multimedia-Inhalt unter der folgenden Formatierung aufgezeichnet werden:
- Niveau 0, das die Identifikationsdaten des Inhalts umfasst,
- Niveau 1, das den Typ des Netzes (30) des Zugangs zu dem Multimedia-Inhalt umfasst,
- Niveau 2, das den Identifikator des Kommunikationsnetzes (40; 50; 60) für den Zugang zu dem Multimedia-Inhalt umfasst,
- Niveau 3, das die Informationen zur Authentifizierung, die für den Zugang zu dem Netz erforderlich ist, umfasst,
- Niveau 4, das die Ressourcen, die für die Veröffentlichung des Multimedia-Inhalts erforderlich sind, umfasst,
- Niveau 5, das den Identifikator zum Zugang zu dem Multimedia-Inhalt umfasst,
- Niveau 6, das die Identifikation der Anwendung, die für die Veröffentlichung des Multimedia-Inhalts auf dem Endgerät auszuführen ist, umfasst.

10. Sicherheitsvorrichtung nach Anspruch 8 oder 9, **dadurch gekennzeichnet, dass** sie außerdem Mittel (22) umfasst, um die auf der Sicherheitsvorrichtung (20) heruntergeladenen Dateneinheiten zu prüfen und die Datenbank (25) mit diesen neuen Dateneinheiten in dem Fall einer positiven Prüfung zu aktualisieren, wobei die Aktualisierung der Datenbank darin besteht, Daten einer oder mehrerer Dateneinheiten in Zusammenhang mit einem oder mehreren Multimedia-Inhalten, die bereits in der Datenbank vorhanden sind, zu ändern und/oder eine oder mehrere Dateneinheiten, die neuen Multimedia-Inhalten entsprechen, aufzuzeichnen und/oder eine oder mehrere Dateneinheiten aus der Datenbank zu löschen.

11. Mobiles Endgerät (10), das mit einer Benutzeroberfläche (11) ausgestattet ist, die mindestens Anzeige- und Auswahlmittel umfasst, **dadurch gekennzeichnet, dass** sie eine Sicherheitsvorrichtung nach einem der Ansprüche 8 bis 10 mitführt.

## Claims

1. Method for managing access to multimedia contents (41, 51, 52, 61, 62) by a terminal (10) equipped with a security device (20) managed by a trusted third party, the said terminal comprising a user interface (11) and a publication application (14, 15), the said security device (20) being embedded in the terminal, the said multimedia contents being accessible by the terminal via one or more communication networks (40; 50; 60), the method being **characterized in that** it comprises the following steps:
a) recording, in a database (25) included in the security device managed by the trusted third party, of a set of data for each multimedia content,
b) creation, by the security device (20) and on the basis of the said data recorded on the database (25), of a computerized document corresponding to a menu of multimedia contents,
c) transmission by the security device (20) of the computerized document to the user interface (11),
d) publication of the computerized document by the user interface (11),
e) selection of a multimedia content by the user on the basis of the displayed computerized document,
f) publication of the multimedia content selected by the publication application of the terminal (10) in response to command instructions in respect of the security device (20) and as a function of the set of the data recorded in the security device for the multimedia content selected.

2. Method according to Claim 1, **characterized in that**, in step a), the data of a set of data for each multimedia content are recorded with the following formatting:
- level 0 comprising the content identification data;
- level 1 comprising the type of access network (30) for access to the multimedia content;
- level 2 comprising the identifier of the communication network (40; 50; 60) for accessing the multimedia content;
- level 3 comprising the information on the authentication required for access to the said network;
- level 4 comprising the resources required for publication of the multimedia content;
- level 5 comprising the multimedia content access identifier;
- level 6 comprising the identification of the application to be executed for the publication of the multimedia content on the terminal.

3. Method according to Claim 1 or 2, **characterized in that**, in step f), the security device (20) transmits to the operating system of the terminal (12) a command to open a connection to the communication network identified in the set of the data of the selected multimedia content and, in response to the confirmation of connection to the communication network, a command to publish the multimedia content on the terminal (10).

4. Method according to Claim 3, **characterized in that** the command to publish comprises identification data in respect of an application to be executed for the publication of the multimedia content on the terminal (10).

5. Method according to Claim 3 or 4, **characterized in that** the command to open a connection furthermore comprises authentication data for access to the communication network.

6. Method according to any one of Claims 1 to 5, **characterized in that** it furthermore comprises a step of downloading new sets of data and a step of verifying the said downloaded sets of data, the security device (20) updating the database (25) with these new sets of data in case of positive verification, and **in that** the updating of the database (25) consists in modifying data of one or more data sets relating to one or more multimedia contents already present in the base, and/or in recording one or more data sets corresponding to new multimedia contents, and/or deleting one or more data sets from the base.

7. Method according to any one of Claims 1 to 6, **characterized in that** the user interface (11) of the terminal (10) is a Web browser and **in that** the computerized document corresponding to a menu of multimedia contents is identified by a URI or URL address.

8. Security device (20) managed by a trusted third party and embedded in a communication terminal (10), the said communication terminal comprising a user interface (11) and a publication application (14, 15) and being used to access multimedia contents (41, 51, 52, 61, 62) via one or more communication networks (40; 50; 60), the said security device being **characterized in that** it comprises:
- a database (25), for storing a set of data for each multimedia content,
- means (21) for creating on the basis of the data stored in the database (25) a computerized document corresponding to a menu of multimedia contents;
- means for transmitting the computerized document to the user interface (11) of the terminal so as to publish the menu of multimedia contents on the terminal;
- means (23) for dispatching command instructions to the publication application of the terminal for a publication of the multimedia content selected on the basis of the menu displayed on the terminal (10) as a function of the set of the data recorded in the security device for the multimedia content selected.

9. Device according to Claim 8, **characterized in that** the data of a set of data for each multimedia content are stored with the following formatting:
- level 0 comprising the content identification data;
- level 1 comprising the type of access network (30) for access to the multimedia content;
- level 2 comprising the identifier of the communication network (40; 50; 60) for accessing the multimedia content;
- level 3 comprising the information on the authentication required for access to the said network;
- level 4 comprising the resources required for publication of the multimedia content;
- level 5 comprising the multimedia content access identifier;
- level 6 comprising the identification of the application to be executed for the publication of the multimedia content on the terminal.

10. Security device according to Claim 8 or 9, **characterized in that** it furthermore comprises means (22) for verifying the sets of data downloaded on the security device (20) and for updating the database (25) with these new sets of data in case of positive verification, the updating of the database consisting in modifying data of one or more data sets relating to one or more multimedia contents already present in the base, and/or in recording one or more data sets corresponding to new multimedia contents, and/or deleting one or more data sets from the base.

11. Mobile terminal (10) equipped with a user interface (11) comprising at least display and selection means, **characterized in that** a security device according to any one of Claims 8 to 10 is embedded in it.
